Europäisches Patentamt

European Patent Office

Office européen des brevets

(19)

(11) Publication number: 0 368 405
A2

# (12) EUROPEAN PATENT APPLICATION

(21) Application number: 89202787.1

(22) Date of filing: 06.11.89

(51) Int. Cl.⁵: B60J 7/057

(30) Priority: 10.11.88 NL 8802770

(43) Date of publication of application:
16.05.90 Bulletin 90/20

(84) Designated Contracting States:
DE FR GB IT NL SE

(71) Applicant: VERMEULEN-HOLLANDIA
OCTROOIEN II B.V.
Küppersweg 9-15
NL-2031 EA Haarlem(NL)

(72) Inventor: Huyer, Johannes Nicolaas
Rietkamp 4
NL-1991 BN Velserbroek(NL)

(74) Representative: Metman, Karel Johannes et al
Octrooibureau Los en Stigter B.V. P.O.Box
20052
NL-1000 HB Amsterdam(NL)

(54) Electrically operated open roof construction for a vehicle.

(57) An electrically operated open roof construction for a vehicle having an opening (2) in its fixed roof (1) comprises a stationary frame (3) and an adjustable panel (4) supported by the frame. The panel is movable between a closed position, in which the roof opening (2) is closed, and a completely or partially opened position, in which the roof opening (2) is completely or partially released. An adjusting element (8) for the panel (4) is provided on either longitudinal side of the roof opening (2). Two high speed electric drive motors (9) are fixed to the stationary frame (3) and are operatively connected to both adjusting elements (8) by means of a transmission (10, 11). Each electric drive motor (9) is connected to the respective adjusting element (8) by its own transmission (10, 11) and is synchronized by a torsional stiff synchronizing cable (12).

fig.2

## Electrically operated open roof construction for a vehicle

The invention relates to an electrically operated open roof construction for a vehicle having an opening in its fixed roof, comprising a stationary frame; an adjustable panel or the like supported by the frame, the panel being movable between a closed position, in which the roof opening is closed, and a completely or partially opened position, in which the roof opening is completely or partially released; an adjusting means for the panel provided on either longitudinal side of the roof opening; and electric drive means fixed to the stationary frame and operatively connected to both adjusting means by means of transmission means.

In a known embodiment of such an open roof construction the electric drive means consist of an electric motor being fixed to the front or rear side of the stationary frame substantially in the longitudinal center thereof. This electric motor drives two pull and push cables serving as transmission means and each being connected to the respective driving slide.

It is an object of the invention to improve the open roof construction of the type mentioned in the preamble.

For this purpose the open roof construction according to the invention is characterized in that the electric drive means include two drive motors each connected to the respective adjusting means by its own transmission means and being synchronized by a synchronizing device.

By using two drive motors instead of one, as in the known open roof construction, each drive motor has to produce only half of the power necessary for adjusting both said adjusting means, permitting the use of smaller drive motors which can be housed in the frame more easily, and/or permitting the reduction of the structural height of the frame in the area of the drive motor. The synchronizing device ensures the adjusting means at both sides of the panel to be driven equally thereby preventing the panel from being pulled out of alignment.

Preferably, the drive motors are mounted on the sides of the stationary frame.

Due to this feature the frame may normally be constructed shorter since there is no need anymore for space at the front or rear side for housing the single drive motor. In this manner, building-in the open roof construction causes less loss of headroom in the interior of the vehicle in comparison with the known open roof construction.

In the embodiment of the open roof construction wherein on both longitudinal sides of the frame there is provided a stationary guide in which a driving slide for the adjusting means is slidably guided, it is favourable that the drive motors are provided alongside the guides, preferably at the front end thereof.

A very simple prefered embodiment of the invention is characterized in that the synchronizing device is a mechanical synchronizing means, which is preferably a flexible torsional stiff synchronizing cable extending between both longitudinal sides of the frame and forming a rotational connection between the drive motors or adjusting means, respectively.

The torsional rigidness of this synchronizing cable ensures a rotationally fixed connection between the drive motors preventing mutual drift and thereby ensuring a good synchronization of the drive motors in a very simple way.

Herewith it is advantageously if each drive motor drives a threaded spindle through a drive gear, the threaded spindle engaging the respective driving slide and being connected to the respective ends of the torsional rigid synchronizing cable in a rotational fixed manner, so as to be driven in opposite directions.

The drive gear and the threaded spindle serve in this case as transmission means between the drive motors and the respective driving slides.

The invention will hereafter be elucidated with reference to the drawing showing, in a very schematic way, an embodiment of the open roof construction according to the invention by way of example.

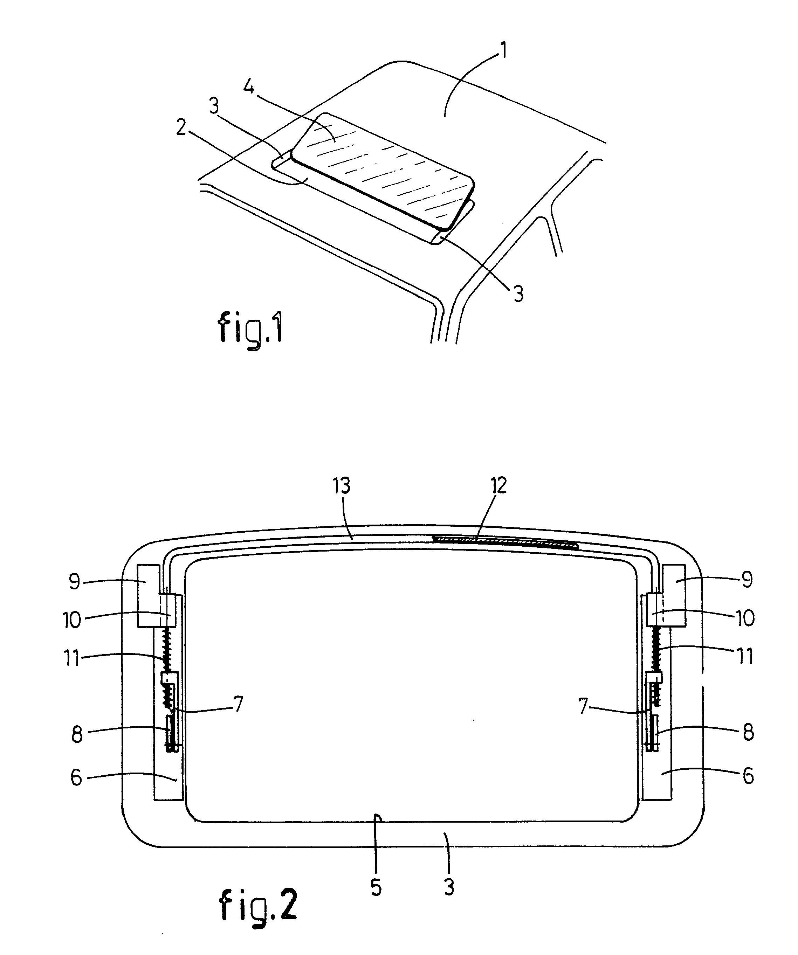

Fig. 1 is a schematic perspective view of a vehicle having the open roof construction according to the invention.

Fig. 2 is a schematic plan view of an open roof construction according to the invention in unmounted condition, wherein all parts that are not relevant to the invention are omitted.

The drawing shows an embodiment of an electrically operated open roof construction for a vehicle of which the fixed roof 1 is provided with an opening 2.

The open roof construction has a stationary frame 3 adapted to be attached to the fixed roof 1 of the vehicle, and a panel 4 adjustably supported by the frame 3. This panel 4 is movable between a closed position in which the roof opening 2 is closed, and a completely or partially opened position in which the roof opening is completely or partially released. The embodiment shown by way of example is a so-called "spoiler-roof" wherein the panel 4 is adapted to be placed in a backwardly and upwardly inclined position and to be slid backwardly above the fixed roof 1. However, the invention is applicable in all types of electrically operated open roof constructions.

The adjustment of the panel 4 takes place in a manner known perse. For this purpose there is provided a longitudinal horizontal stationary guide 6 on either longitudinal side of a passage 5 in the frame 3 lying substantially below the roof opening 2 in the mounted condition of the open roof construction. In said guide 6 there is slidably guided a driving slide 7 directly or indirectly controlling an adjusting means 8 connected to the panel 4 in order to adjust the panel 4.

The electric drive means 4 operating the panel 4 comprise, in accordance with the invention, two small high speed electric motors 9 disposed laterally of the passage 5 near the front end of the stationary guide 6. The rotary axis of the electric motors 9 extends in longitudinal direction and both motors rotate in opposite directions. Through an integrated reduction drive gear 10 each electric motor 9 is in engagement with a threaded spindle 11 being rotatably drivable about its axis and being in engagement with its outer threads with the respective driving slide 7. The threads of both threaded spindles 11 are wound in opposite sense. In this way opposite rotations of said threaded spindles 11 are converted into sliding movements of said driving slides 7 in the same direction.

In order to ensure that both driving slides 7 are tracking and the panel 4 is therefore adjusted equally on both longitudinal sides, both electric motors 9 are synchronized by means of a synchronizing device. In the embodiment of the invention shown by way of example this takes place mechanically by means of a flexible torsional stiff synchronizing cable 12, such as for instance a morse cable. On the front side of the frame 3 in front of the passage 5 the synchronizing cable 12 is guided through a guide sleeve 13 fixedly connected to the frame 3. The ends of the synchronizing cable lying on both longitudinal sides of the passage 5 are each connected to the respective threaded spindle 11 in a rotationally fixed manner. Due to the torsional stiffness of the synchronizing cable 12 the relative angular rotation between both ends thereof and consequently between both threaded spindles 11 is minimal, so as to ensure a good synchronization of the electric motors 9, or the threaded spindles 11, respectively.

Said two electric motors provided on the sides of the frame offer the advantage, that the frame, due to the omission of the single electric motor on the front or rear side of the frame, can be constructed shorter as a hole, thereby losing less head room in the vehicle when the open roof construction is built in. Furthermore this shorter length of building of the frame in a spoiler roof according to the embodiment shown by way of example permits the open roof construction to be mounted from the outside through the roof opening.

The invention is not restricted to the embodiment shown in the drawing by way of example, which can be varied in different ways within the scope of the invention. It is for instance possible to use other kinds of motors then electric motors. The panel may also be replaced by other closure means, such as a foldable cover, or multiple panel means.

## Claims

1. Electrically operated open roof construction for a vehicle having an opening (2) in its fixed roof (1), comprising a stationary frame (3); an adjustable panel (4) or the like supported by the frame, the panel being movable between a closed position, in which the roof opening (2) is closed, and a completely or partially opened position, in which the roof opening (2) is completely or partially released; an adjusting means (8) for the panel (4), provided on either longitudinal side of the roof opening (2); and electric drive means fixed to the stationary frame (3) and operatively connected to both adjusting means (8) by means of transmission means (10, 11), **characterized** in that the electric drive means include two drive motors (9) each connected to the respective adjusting means (8) by its own transmission means (10, 11) and being synchronized by a synchronizing device (12).

2. Open roof construction according to claim 1, **characterized** in that the drive motors (9) are mounted on the sides of the stationary frame (3).

3. Open roof construction according to claim 2, wherein on both longitudinal sides of the frame (3) there is provided a stationary guide (6) in which a driving slide (7) for the adjusting means (8) is slidably guided, **characterized** in that the drive motors (9) are provided alongside the guides (6), preferably at the front end thereof.

4. Open roof construction according to one of the preceding claims, **characterized** in that the synchronizing device (12) is a mechanical synchronizing means.

5. Open roof construction according to claim 2 or 3, and 4, **characterized** in that the mechanical synchronizing means (12) is a flexible torsional stiff synchronizing cable extending between both longitudinal sides of the frame (3) and forming a rotational connection between the drive motors (9) or adjusting means 8, respectively.

6. Open roof construction according to claims 3 and 5, **characterized** in that each drive motor (9) drives a threaded spindle (11) through a drive gear, the threaded spindle engaging the respective driving slide (7) and being connected to the respective ends of the torsional stiff synchronizing cable (12) in a rotational fixed manner, so as to be driven in opposite directions.

7. Open roof construction according to one of the preceding claims, **characterized** in that the drive motors (9) consist of small high speed electric motors, and the drive gears (10) being reduction gears.

fig.1

fig.2